# EUROPÄISCHE PATENTSCHRIFT

(11) **EP 2 103 102 B1**
(45) Veröffentlichungstag und Bekanntmachung des Hinweises auf die Patenterteilung: **23.01.2019**
(21) Anmeldenummer: 07822123.1
(22) Anmeldetag: 31.10.2007
(51) Int. Cl.: H04N 5/355, H04N 5/374, H04N 5/345, H04N 5/353

(54) **VERFAHREN ZUM BETREIBEN EINES PHOTOELEKTRISCHEN SENSORARRAYS**
METHOD FOR THE OPERATION OF A PHOTOELECTRIC SENSOR ARRAY
PROCÉDÉ POUR L'EXPLOITATION D'UN RÉSEAU DE DÉTECTION PHOTOÉLECTRIQUE

(30) Priorität: 04.11.2006 DE 102006052059
(43) Veröffentlichungstag der Anmeldung: 23.09.2009
(73) Patentinhaber: Leopold Kostal GmbH & Co. KG, 58513 Lüdenscheid (DE)
(72) Erfinder: BLÄSING, Frank, 59457 Werl (DE)
(74) Vertreter: Kerkmann, Detlef
(86) Internationale Anmeldenummer: PCT/EP2007/061776
(87) Internationale Veröffentlichungsnummer: WO 2008/053021

(56) Entgegenhaltungen:
- US-A- 5 748 303
- US-A1- 2002 012 057
- US-A1- 2003 095 189
- US-B1- 6 665 010
- US-B1- 7 038 820

## Beschreibung

Die Erfindung betrifft ein Verfahren zur Erhöhung der Dynamik beim Betreiben eines photoelektrischen Sensorarrays zur Aufnahme von Bildern mit einer zweidimensionalen Anordnung einer Vielzahl von einzelne Bildpunkte bildenden, frei adressierbaren und auslesbaren photoelektrischen Wandlerelementen, welche bei Beaufschlagung mit Licht ein der Lichtstärke und der Belichtungsdauer entsprechendes elektrisches Signal generieren, wobei vor einer ersten Belichtungszeit alle Wandlerelemente zurückgesetzt werden, wobei nach Ablauf der ersten Belichtungszeit Wandlerelemente ausgelesen werden und die Belichtung für die Dauer einer zweiten Belichtungszeit ohne vorherige Löschung des Inhaltes der Wandlerelemente fortgesetzt wird, und wobei nach Ablauf der zweiten Belichtungszeit Wandlerelemente ausgelesen werden.

Photoelektrische Sensorarrays der hier angesprochenen Art werden beispielsweise im Kraftfahrzeugbereich in Kamerasystemen eingesetzt, welche Bilder einer Umgebung aufnehmen. Aus den aufgenommenen Bildern werden dann beispielsweise mittels Bildanalyse Reaktionen abgeleitet oder aber die aufgenommenen Bildsequenzen abgespeichert. Ein besonders interessantes Anwendungsgebiet für diese Sensorarrays bilden dabei im Bereich der Kraftfahrzeuge Fahrerassistenzsysteme mit unterschiedlichen Aufgaben wie etwa Spurerkennung oder Verkehrszeichenerkennung.

Vorteilhaft ist hierbei die Möglichkeit, gezielt Teilbereiche des Sensorarrays, d.h. also zusammengefasste Gruppen oder Cluster von auch als Pixeln bezeichneten Bildpunkten, auszulesen. Diese Teilbereiche können sogenannte Regions of Interest bilden, welche dann etwa jeweils einer von mehreren unterschiedlichen Aufgaben zugeordnet sind. Nach jedem Auslesevorgang wird dabei das gesamte Sensorarray zurückgesetzt, d.h. der Inhalt sämtlicher Bildpunkte gelöscht.

Hierbei besteht jedoch das Problem, dass für die unterschiedlichen Funktionalitäten unterschiedliche Bildbereiche mit teilweise sehr verschiedenen Helligkeitswerten betrachtet werden müssen.

Aus dem Stand der Technik sind Halbleiterbildsensoren bekannt, die den erzielbaren Signalhub eines Pixels auf mehrere Teilstücke linearer Kennlinien mit unterschiedlichen Steigungen aufteilen. Hierdurch wird eine höhere Dynamik auf den Signalhub des Pixels abgebildet. Diese mehrfach geknickten Kennlinien gelten für den gesamten Bildsensor und verringern den erzielbaren Signalhub je linearem Kennlinienteilstück erheblich.

Die US 2003/0095189A1 zeigt ein Verfahren gemäß dem Oberbegriff des Patentanspruchs 1. Bei diesem Verfahren zum Aufnehmen eines Bildes mittels eines photoelektrischen Sensorarrays wird das gesamte Array mehrfach hintereinander komplett ausgelesen, ohne zwischendurch die Wandlerelemente zurückzusetzen. Eine hohe Dynamik des Bildes verbunden mit einer geringen Bewegungsunschärfe wird bei dem beschriebenen Verfahren erreicht, indem nach jeweils einem Auslesevorgang für jedes Pixel eine Schätzung des nach diesem letzten Auslesevorgang erreichten theoretischen Photostroms vorgenommen wird. Falls nach dem nächsten Auslesevorgang eine Abweichung von dem geschätzten theoretischen Verlauf der Photostromkurve als Funktion der Belichtungszeit festgestellt wird, weil eine Sättigung des Pixels erreicht ist, oder eine Bewegung im Bild stattgefunden hat, wird die vorhergehende Schätzung beibehalten und der theoretische Photostrom für dieses Pixel als Endergebnis übernommen. Andernfalls erfolgt eine neue Schätzung auf Basis des aktuellen Auslesevorgangs. Die in diesem Dokument beschriebene Vorgehensweise erfordert eine ganz erhebliche Rechenleistung, die in Echtzeit während des Bilderfassungsvorgangs erbracht werden muss, so dass seine Durchführbarkeit entscheidend von der Verfügbarkeit entsprechend leistungsfähiger Prozessoren abhängt.

Für den in der vorliegenden Erfindung beabsichtigten Anwendungsbereich etwa in Kamerasystemen für Kraftfahrzeuge ist dieses Verfahren zwar grundsätzlich verwendbar, dürfte aber schon allein aus Kostengründen nicht eingesetzt werden. Ein solches Verfahren ist aber auch für diese Zwecke nicht erforderlich, da es technisch zu aufwendig ist und seine Hauptvorteile gar nicht genutzt würden. Das Verfahren zum Betreiben eines photoelektrischen Sensorarrays gemäß der vorliegenden Erfindung hat gegenüber der vorbekannten Vorgehensweise den Vorteil, dass die erreichbare Dynamik zwischen unterschiedlichen Bereichen innerhalb eines Bildes erheblich verbessert ist, ohne einen großen zusätzlichen Hardwareaufwand oder eine hohe Rechenleistung zu erfordern.

Dies wird erfindungsgemäß dadurch ermöglicht, dass das Sensorarray mehrere, nichtüberlappende Bildbereiche aufweist, dass nach Ablauf der ersten Belichtungszeit durch eine globale Verschlusseinrichtung zum Steuern der Belichtung der Wandlerelemente die Belichtung der Wandlerelemente für die Dauer einer Belichtungspause unterbrochen wird, dass während der Belichtungspause eine erste räumlich zusammenhängende Gruppe von Wandlerelementen eines ersten Bildbereichs ausgelesen wird, dass nach Ablauf der zweiten Belichtungszeit eine zweite räumlich zusammenhängende Gruppe von Wandlerelementen eines mit dem ersten Bildbereich nicht überlappenden, zweiten Bildbereichs ausgelesen wird, und dass die Wandlerelemente des ersten Bildbereichs nicht erneut ausgelesen werden.

Der Erfindung liegt der Gedanke zugrunde, ein Sensorarray in mehrere, nichtüberlappende Bereiche im Sinne der zuvor beschriebenen Regions of Interest "zerteilen" zu können, und zwar so, dass jeder dieser Bereiche mit einer individuellen Belichtungszeit belichtet werden kann, wobei sich die Belichtungszeiten zumindest teilweise überlappen.

Besonders vorteilhaft ist hierbei eine Ausführung, bei der für alle Regions of Interest die Belichtung zum gleichen Zeitpunkt startet und nach unterschiedlichen Belichtungszeiten (t1, t1+t2, ...) endet.

Die sich damit ergebende Gesamtzeit eines Auslesevorganges bei dem erfindungsgemäßen Verfahren setzt sich aus der Dauer der längsten Belichtungszeit und den einzelnen Auslesezeiten der Teilbereiche zusammen, was einen immensen Zeitvorteil gegenüber der standardmäßigen sequentiellen Vorgehensweise bedeutet, bei der nacheinander jeweils alle Bereiche mit der für jeweils einen bestimmten Bereich vorgesehenen Belichtungszeit belichtet werden, und dann der jeweilige bestimmte Bereich ausgelesen wird.

Durch das Einfügen von Belichtungspausen mittels der globalen Verschlusseinrichtung (global Shutter), während derer die Pixel einer oder mehrer Regions of Interest ausgelesen werden, lässt sich diese Funktion mit Hilfe einer nur geringfügig modifizierten Standardarchitektur des Sensorarrays ermöglichen.

Der Ablauf eines gesamten Bildaufnahmevorgangs stellt sich dann wie folgt dar:
- Reset (Löschen) aller Pixel zum Startzeitpunkt
- Belichten aller Pixel für die erste Belichtungszeit t1
- Anhalten der Belichtung für alle Pixel über global shutter (Belichtungspause)
- Auslesen eines ersten Bildbereiches (Gesamtbelichtungszeit t1)
- Weiterbelichten aller Pixel für die zweite Belichtungszeit t2
- Anhalten der Belichtung für alle Pixel über global shutter
- Auslesen eines zweiten Bildbereiches (Gesamtbelichtungszeit t1+t2)

Selbstverständlich lässt sich die beschriebene Vorgehensweise auch weiter fortsetzen, um einen dritten, vierten und noch weitere Bildbereiche mit noch längeren Belichtungszeiten t1+t2+t3, t1+t2+t3+t4 und so weiter auszulesen.

Wichtig ist hierbei, dass zwischen den einzelnen Teilbelichtungen kein Reset der gesamten Pixel durchgeführt wird, so dass die Pixel, die noch nicht ausgelesen wurden, ausgehend von dem Zustand weiterbelichtet werden, in dem sie beim Einsetzen des global shutters eingefroren wurden.

Durch das Anhalten der Belichtung während des Auslesevorgangs eines Teilbereiches ist es möglich, die Funktion mit einem globalen elektronischen Shutter zu realisieren, wie er bereits heute bei Bildsensoren zum Einsatz kommt.

Eine denkbare Alternative zu dieser Vorgehensweise, bei der ein Weiterbelichten der anderen Bereiche während des Auslesens eines ausgewählten Bereichs erfolgt, würde einen lokalen, auf den auszulesenden Bereich adressierbaren Shutter erfordern, der die Komplexität der Schaltung extrem erhöhen würde.

## Patentansprüche

1. Verfahren zur Erhöhung der Dynamik beim Betreiben eines photoelektrischen Sensorarrays zur Aufnahme von Bildern mit einer zweidimensionalen Anordnung einer Vielzahl von einzelne Bildpunkte bildenden, frei adressierbaren und auslesbaren photoelektrischen Wandlerelementen, welche bei Beaufschlagung mit Licht ein der Lichtstärke und der Belichtungsdauer entsprechendes elektrisches Signal generieren, wobei vor einer ersten Belichtungszeit (t1) alle Wandlerelemente zurückgesetzt werden, wobei nach Ablauf der ersten Belichtungszeit (t1) Wandlerelemente ausgelesen werden und die Belichtung für die Dauer einer zweiten Belichtungszeit (t2) ohne vorherige Löschung des Inhaltes der Wandlerelemente fortgesetzt wird, und wobei nach Ablauf der zweiten Belichtungszeit (t2) Wandlerelemente ausgelesen werden, wobei das Sensorarray mehrere, nichtüberlappende Bildbereiche aufweist, **dadurch gekennzeichnet, dass** nach Ablauf der ersten Belichtungszeit (t1) durch eine globale Verschlusseinrichtung zum Steuern der Belichtung der Wandlerelemente die Belichtung der Wandlerelemente für die Dauer einer Belichtungspause unterbrochen wird, dass während der Belichtungspause eine erste räumlich zusammenhängende Gruppe von Wandlerelementen eines ersten Bildbereichs ausgelesen wird, dass nach Ablauf der zweiten Belichtungszeit (t2) eine zweite räumlich zusammenhängende Gruppe von Wandlerelementen eines mit dem ersten Bildbereich nicht überlappenden, zweiten Bildbereichs ausgelesen wird, und dass die Wandlerelemente des ersten Bildbereichs nicht erneut ausgelesen werden.

2. Verfahren nach Anspruch 1, **dadurch gekennzeichnet, dass** nach Ablauf der zweiten Belichtungszeit (t2) die Belichtung der Wandlerelemente durch die globale Verschlusseinrichtung für die Dauer einer zweiten Belichtungspause unterbrochen wird, dass während der zweiten Belichtungspause weitere Wandlerelemente weiterer Bildbereiche ausgelesen werden, und dass danach die Belichtung ohne vorherige Löschung des Inhaltes der Wandlerelemente für die Dauer jeweils weiterer Belichtungszeiten (t3, t4,...), unterbrochen von jeweils weiteren Belichtungspausen mit weiteren Auslesevorgängen, fortgesetzt wird.

## Claims

1. Process for increasing the dynamics when operating a photoelectric sensor array for capturing images, having a two-dimensional arrangement of freely addressable and readable photoelectrical transducer elements which form a plurality of individual pixels and which, upon application of light, generate an electric signal corresponding to the light intensity and the exposure period, whereby all transducer elements are reset prior to a first exposure period (t1), whereby transducer elements are read out upon expiry of the first exposure period (t1) and the exposure to light is continued for the duration of a second exposure period (t2) without any previous deletion of the content of the transducer elements and whereby, upon expiry of the second exposure period (t2), transducer elements are read out, whereby the sensor array has several image areas that do not overlap,
**characterised in that**
upon expiry of the first exposure period (t1), the exposure of the transducer elements is interrupted by a global shutter device for controlling the exposure of the transducer elements for the duration of an exposure pause; that during the exposure pause a first spatially coherent group of transducer elements from a first image area is read out; that upon expiry of the second exposure period (t2) a second spatially coherent group of transducer elements is read out which does not overlap with the first image area, and that the transducer elements of the first image area are not read out again.

2. Process according to Claim 1, **characterised in that** upon expiry of the second exposure period (t2), the exposure of the transducer elements is interrupted by the global shutter device for the duration of a second exposure pause; that during the second exposure pause further transducer elements for further image areas are read out and that, thereafter, the exposure is continued without any previous deletion of the content of the transducer elements for the duration of the relevant further exposure periods (t3, t4, ...) as the case may be, each interrupted by further exposure pauses with further read-out operations.

## Revendications

1. Procédé, destiné à accroître la dynamique lors de l'exploitation d'un réseau de détection photoélectrique pour la prise d'images avec un arrangement bidimensionnel d'un nombre élevé d'éléments convertisseurs photoélectriques, qui, formant des points image et pouvant être adressés librement et lus, génèrent, lors de l'exposition à la lumière, un signal électrique, correspondant à l'intensité lumineuse et à la durée de l'exposition, sachant que, avant un premier temps de pose (t1), tous les éléments convertisseurs sont réinitialisés, sachant que, après l'écoulement du premier temps de pose (t1), les éléments convertisseurs sont lus et que l'exposition est poursuivie pour la durée d'un deuxième temps de pose (t2), sans effacement préalable du contenu des éléments convertisseurs, et sachant que, après l'écoulement du deuxième temps de pose (t2), des éléments convertisseurs sont lus, sachant que le réseau de détection présente plusieurs zones d'image qui ne se chevauchent pas,
**caractérisé en ce que**,
après l'écoulement du premier temps de pose (t1), par le biais d'une installation d'obturation globale pour la commande de l'exposition à la lumière des éléments convertisseurs, l'exposition des éléments convertisseurs est interrompue pour la durée d'un arrêt d'exposition, que, pendant l'arrêt d'exposition, un premier groupe étroitement cohérent d'éléments convertisseurs d'une première zone d'image est lu, que, après le deuxième temps de pose (t2), un deuxième groupe étroitement cohérent d'éléments convertisseurs d'une deuxième zone d'image, qui ne se chevauche pas avec la première zone d'image, est lu, et que les éléments convertisseurs de la première zone d'image ne sont pas lus de nouveau.

2. Procédé selon la revendication 1, **caractérisé en ce que** après l'écoulement du deuxième temps de pose (t2), l'exposition des éléments convertisseurs, par le biais de l'installation d'obturation globale, est interrompue pour la durée d'un deuxième arrêt d'exposition, que, pendant le deuxième arrêt d'exposition, d'autres éléments convertisseurs d'autres zones d'image sont lus, et que l'exposition, sans effacement préalable du contenu des éléments convertisseurs, est ensuite poursuivie, pour la durée respective d'autres temps de pose (t3, t4...), avec d'autres processus de lecture, avec interruptions respectives, dues à d'autres arrêts d'exposition.
